# EUROPÄISCHE PATENTSCHRIFT

(11) **EP 2 537 696 B1**
(45) Veröffentlichungstag und Bekanntmachung des Hinweises auf die Patenterteilung: **25.12.2013**
(21) Anmeldenummer: 12163976.9
(22) Anmeldetag: 12.04.2012
(51) Int. Cl.: B65D 6/34, B60K 15/03

(54) **Kraftstoffreservoir für ein Kraftfahrzeug**
Fuel reservoir for a motor vehicle
Réservoir de carburant pour un véhicule automobile

(30) Priorität: 24.06.2011 DE 102011105780
(43) Veröffentlichungstag der Anmeldung: 26.12.2012
(73) Patentinhaber: Magna Steyr Fuel Systems GesmbH, 8261 Sinabelkirchen (AT)
(72) Erfinder: Pozgainer, Günther, 8045 Graz (AT)
(74) Vertreter: Rausch, Gabriele

(56) Entgegenhaltungen:
- DE-A1- 19 749 950
- DE-A1-102009 036 911
- FR-A1- 2 764 671
- US-A- 6 138 859

## Beschreibung

Die vorliegende Erfindung betrifft ein Kraftstoffreservoir für ein Kraftfahrzeug.

Beim Einsatz derartiger Kraftstoffreservoirs (Tank) in Hybridfahrzeugen kann es aufgrund der besonderen Betriebsbedingungen von diesen Fahrzeugen im Inneren des Tanks zum Auftreten von Überdruck oder Unterdruck kommen. Daher müssen diese Tanks einem vom Umgebungsdruck abweichenden erhöhten bzw. verringerten Innendruck dauerhaft widerstehen und eine ausreichende Festigkeit aufweisen. Bislang können nur Tanks aus Metall diesen Anforderungen genügen. Nachteilig hierbei ist allerdings das hohe Gewicht.

Aus der US 6,338,420 ist ein aus zwei Kunststoffschalen bestehender Tank bekannt, dessen Schalenkörper durch eine Säule im Inneren gegen Wölbung durch einen Über- oder Unterdruck versteift sind. Dazu ist die Säule derart ausgebildet, dass sie ein elastisches Ausgleichselement oder zwei reibend ineinander verschiebbare Teile aufweist. Diese bekannte Ausführung gestattet allerdings keine ausreichend dauerhafte Übertragung von Zugkräften bzw. Druckkräften.

Aus der gattungsbildenden FR 2 764 671 A1 ist ein Behälter bekannt, mit einer Wand, insbesondere aus Verbundmaterial, die eine innere Kammer zur Aufnahme eines unter Druck stehenden Fluids aufweist. Der Behälter ist flach, mit mindestens zwei gegenüberliegenden Wandflächen. Hohl-oder Vollwellen verbinden die gegenüberliegenden Wandflächen. Wenn die Wellen hohl sind, ist ein Vorspannelement mit einer Schraube, Mutter und Scheiben vorgesehen.

Aus der DE 197 49 950 A1 ist ein Behälter zum Speichern von Druckgas bekannt, mit einer Hüllschicht, die einen zur Speicherung des Druckgases vorgesehenen Hohlraum umschließt. Im Hohlraum des Behälters sind Stützelemente angeordnet. Die Stützelemente können als Fäden ausgebildet sein, die durch entsprechende Führungskanäle hindurchgeführt sind.

Es ist eine Aufgabe der vorliegenden Erfindung ein Kraftstoffreservoir für ein Kraftfahrzeug derart weiterzubilden, dass das Kraftstoffreservoir dauerhaft einem hohen Innendruck, insbesondere Unterdruck und/oder Überdruck, standhält und ein geringes Gewicht aufweist.

Diese Aufgabe löst die vorliegende Erfindung durch ein Kraftstoffreservoir für ein Kraftfahrzeug aufweisend einen mit Zu- und Abflussöffnungen versehenen Schalenkörper aus einem Kunststoffmaterial, durch den ein Vorratsraum zur Aufnahme von Kraftstoff vorgegeben ist, wobei innerhalb des Vorratsraums eine Verstärkung zur Kompensation von auf den Schalenkörper wirkenden Kräften vorgesehen ist, wobei die Verstärkung einen Anker und ein Zugentlastungsmittel umfasst, wobei der Anker einen innerhalb des Ankers ausgebildeten Aufnahmeraum für das Zugentlastungsmittel umfasst und wobei das Zugentlastungsmittel zumindest teilweise im Aufnahmeraum des Ankers angeordnet ist und den Schalenkörper du rchdringt, wobei der Anker planparallele Endflächen aufweist und der Anker an seinen Endflächen mit dem Schalenkörper stoffschlüssig verbunden ist und eine offene Längsrippenstruktur aufweist, wodurch eine gute Abstützung von Druckkräften ermöglicht wird.

Aufgrund der erfindungsgemäßen Ausgestaltung, dass innerhalb des Vorratsraums eine im Wesentlichen starre Verstärkung zur Kompensation von auf den Schalenkörper wirkenden Kräften vorgesehen ist, die insbesondere den Schalenkörper stellenweise durchdringende Zugentlastungsmittel umfassen, kann das aus einem Kunststoffmaterial ausgebildete Kraftstoffreservoir den dauerhaft auftretenden Kräften unter den Umgebungsbedingungen dauerhaft standhalten.

Weiterbildungen der Erfindung sind in den abhängigen Ansprüchen, der Beschreibung sowie den beigefügten Zeichnungen angegeben.

Vorzugsweise ist der Anker als Kunststoffanker ausgeführt, ist also aus Kunststoff hergestellt.

Bevorzugt weist der Anker eine längliche Form auf.

Besonders bevorzugt ist der Anker säulenförmig gerade ausgebildet.

Bevorzugt durchdringen beide Enden des Zugentlastungsmittels den Schalenkörper. Hierdurch wird ermöglicht dass Zug beiderseits des Zugentlastungsmittels nicht nur aus dem Innenraum des Kraftstoffreservoirs aufgenommen werden muss.

Bevorzugt ist der Anker an seinen Endflächen mit dem Schalenkörper verschweißt.

Besonders bevorzugt trennt die stoffschlüssige Verbindung den innerhalb des Ankers ausgebildeten Aufnahmeraum für ein Zugentlastungsmittel vom Vorratsraum abdichtend. Dadurch ist der Aufnahmeraum für das Zugentlastungsmittel vom Kraftstoff im Vorratsraum getrennt.

Bevorzugt trennt ein Dichtelement, insbesondere ein Dichtungsring den innerhalb des Ankers ausgebildeten Aufnahmeraum für ein Zugentlastungsmittel vom Vorratsraum abdichtend. Das Dichtelement sorgt insbesondere zusätzlich zu einer abdichtenden Verschweißung des Ankers für eine sichere, flüssigkeitsdichte Trennung zwischen Aufnahmeraum und Vorratsraum.

Bevorzugt ist das Zugentlastungsmittel ein Zugbolzen, der vorzugsweise zumindest teilweise in einer Längsbohrung als Aufnahmeraum innerhalb des Ankers verläuft.

Besonders bevorzugt ist der Zugbolzen als Schraub- oder Nietbolzen ausgeführt, dessen Kopf gegen einen Abschnitt der Außenfläche des Schalenkörpers wirkt. Besonders bevorzugt wirken an beiden Enden des Zugbolzens Köpfe gegen die Außenflächen des Schalenkörpers. Hierdurch wird eine besonders sichere Aufnahme von Zugkräften gewährleistet.

Bevorzugt ist der Kopf des Zugentlastungsmittels durch eine Schraubenmutter oder eine Schraubenmutter zusammen mit einer Unterlegscheibe gebildet.

Vorzugsweise wird der Kopf des Zugbolzens durch eine stoffschlüssig auf dem Schalenkörper angebrachte und vorzugsweise aufgeschweißte Abdeckkappe vom Außenraum abdichtend getrennt. Durch die Abdeckkappe kann die Kraftstoffemission, insbesondere Kohlenwasserstoffemission im Bereich der Anbindungsstellen der Verstärkungselemente im Bereich des Schalenkörpers reduziert werden.

Besonders bevorzugt umfasst das Kraftstoffreservoir eine Anzahl von Verstärkungen, die vorzugsweise annähernd parallel zueinander ausgerichtet sind. Das Kraftstoffreservoir wird dadurch an mehreren Stellen erfindungsgemäß abgestützt.

Die Erfindung wird im Folgenden beispielhaft unter Bezugnahme auf die Zeichnungen beschrieben.

Darin zeigen:
- Fig. 1: eine perspektivische schematische Ansicht eines Kraftstoffreservoirs für ein Kraftfahrzeug der vorliegenden Erfindung;
- Fig. 2: Anker als Einzelteile in unterschiedlich ausgeführten Längen in einer perspektivischen Ansicht, und
- Fig. 3: eine Schnittdarstellung durch eine innerhalb des Vorratsraums angeordnete Verstärkung mit einem den Schalenkörper durchdringenden Zugentlastungsmittel und einem Anker.

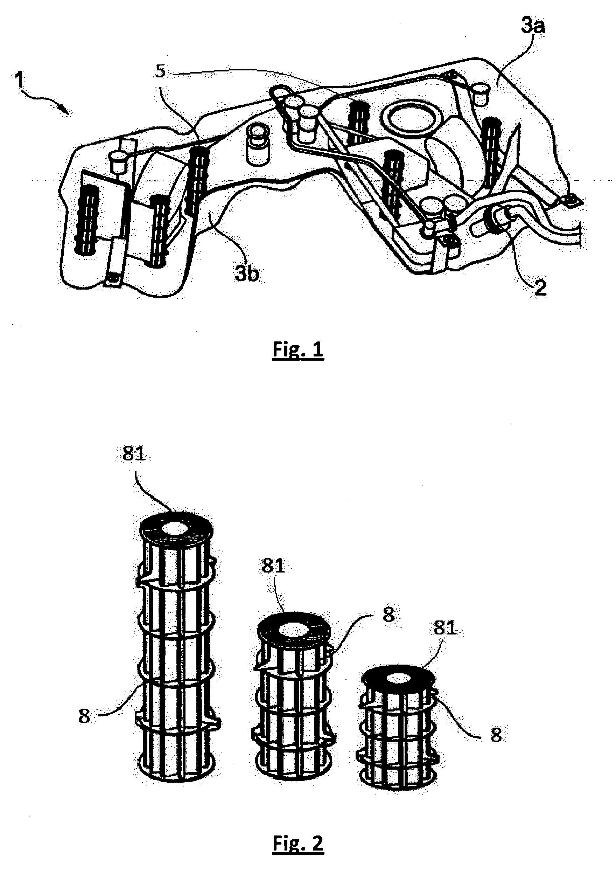

Das in der Figur 1 in schematischer perspektivischer Darstellung abgebildete Kraftstoffreservoir 1, nachfolgend kurz Tank genannt, umfasst im Wesentlichen einen Schalenkörper 3 aus einem Kunststoffmaterial, sowie Verstärkungen 5 zur Kompensation von auf den Schalenkörper 3 wirkenden Kräften. Der Schalenkörper 3 ist vorzugsweise aus einer ersten und einer zweiten Schale 3a, 3b gebildet, die über einen umlaufenden Flansch miteinander verbunden, vorzugsweise verschweißt bzw. stoffschlüssig verbunden sind.

Die Verstärkungen 5 sind, wie es aus den Figuren zu erkennen ist, innerhalb des Vorratsraumes 4 des Tanks 1 angeordnet und umfassen jeweils längliche aus Kunststoff ausgeführte Anker 8 sowie den Schalenkörper 3 stellenweise durchdringende Zugentlastungsmittel 6, die Zugkräfte übertragen können. Die Zugentlastungsmittel 6 haben unter anderem die Aufgabe ein Ausbeulen bzw. Zusammenziehen des Schalenkörpers 3 durch den Innendruck zu verhindern. Die Anker 8 sind dabei als säulenförmige Elemente ausgeführt, die parallel zueinander ausgerichtet sind. Die Anker 8 weisen eine zylindrische längliche Form auf und weisen an ihren Endbereichen 81 und 82 vorzugsweise planparallele Endflächen auf. Diese umfassen einen vorzugsweise umlaufenden radial verlaufenden Flansch. Mittels der Endbereiche 81, 82 sind die Anker 8 mit dem Schalenkörper 3 bzw. der ersten und zweiten Schale 3a, 3b stoffschlüssig verbunden, insbesondere verschweißt. Über die Fläche der Endbereiche bzw. der radial umlaufenden Flansche können größere Kräfte übertragen werden.

Wie es aus der Detaildarstellung der Figur 2 zu ersehen ist, weisen die säulenförmig ausgebildeten Anker 8 beispielsweise eine offene Rippenstruktur auf. Die Figur 2 zeigt Anker 8 in unterschiedlichen Längen, die je nach Abstand der Innenflächen gegenüberliegender Bereiche der ersten und zweiten Schale entsprechend eingesetzt werden. Die Anker 8 weisen planparallele Endflächen 81,82 auf. Innerhalb der Anker 8 ist jeweils ein Aufnahmeraum für ein Zugentlastungsmittel angeordnet.

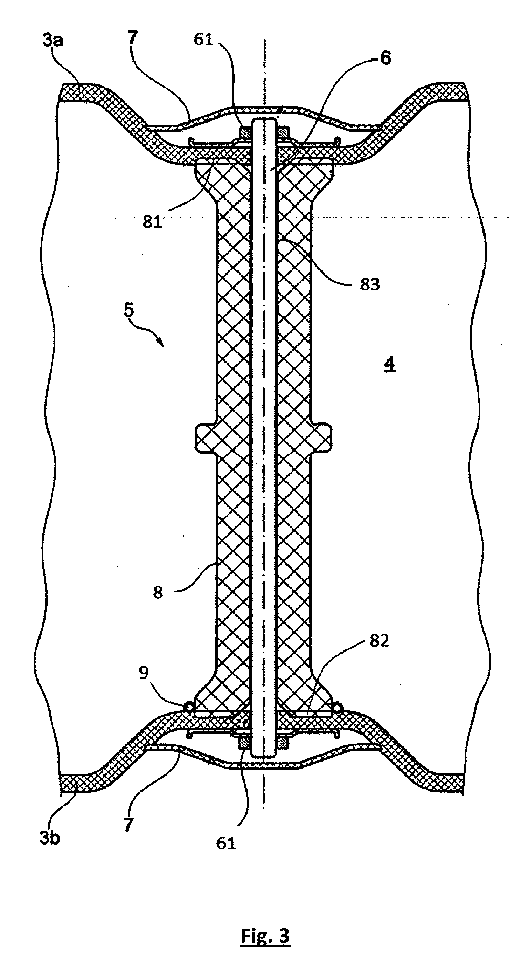

Die Schnittdarstellung der Figur 3 zeigt, dass die Anker 8 mit einer mittig ausgebildeten in Axialrichtung verlaufenden Längsbohrung ausgeführt sind. Diese Längsbohrung ist als Aufnahmeraum 83 für ein als Zugbolzen ausgebildetes Zugentlastungsmittel 6 mit Köpfen 61 ausgeführt. Im zusammengebauten Zustand ist dieser Aufnahmeraum 83 aufgrund der stoffschlüssigen Verbindung der Endbereiche 81, 82 der Anker 8 mit den Schalen 3a, 3b des Schalenkörpers 3, gegebenenfalls unterstützt durch weitere Dichtelemente 9 zwischen Anker 8 und Schalenkörper 3, vom Vorratsraum 4 flüssigkeitsdicht abgetrennt.

Die Zugbolzen 6 sind als Metallbolzen ausgeführt und dienen der Zugentlastung der im Vorratsraum 4 angeordneten Anker 8, die aus einem Kunststoffmaterial ausgeführt sind. Diese Zugentlastung ist notwendig, da die Kunststoffteile bzw. Verbindungsstellen der Kunststoffteile (Schweißverbindung Kunststoffanker/Kunststoffschalen) unter Temperatur und Kraftstoffeinfluss und auch bei auftretender Dauerbelastung ein Kriechverhalten aufweisen. Des Weiteren besitzt Kunststoff die Eigenschaft unter dem Einfluss von Temperatur und Kraftstoff zu quellen. Die Zugentlastungsmittel 6 ermöglichen, dass der Schalenkörper 3 trotz dieser Eigenschaften den dauerhaft auftretenden Kräften unter den beschriebenen Umgebungsbedingungen dauerhaft standhält. Die Zugbolzen 6 sind in die Längsbohrung der Anker 8 eingesetzt und sind als stabförmige Schraub- oder Nietbolzen ausgebildet. Die Endbereiche der Zugbolzen sind durch entsprechende Durchgangsbohrungen der oberen bzw. unteren Schale 3a, 3b des Schalenkörpers 3 geführt und derart ausgebildet, dass deren Köpfe 61 gegen einen Abschnitt der Außenfläche des Schalenkörpers 3 wirken. Die Endbereiche bzw. Köpfe 61 können dabei eine Unterlegscheibe, eine Mutter, ein umgebördeltes Niet etc. umfassen. Die Zeichnung der Figur 3 zeigt weiterhin, dass die Köpfe 61 der Zugbolzen 6 durch eine stoffschlüssige auf dem Schalenkörper 3 angebrachte und vorzugsweise aufgeschweißte Abdeckkappe 7 vom Außenraum abdichtend abgetrennt sind. Durch die Anordnung der Abdeckkappe 7 kann die Kraftstoffemission, insbesondere Kohlenwasserstoffemission im Bereich der Anbindungsstellen der Verstärkungselemente im Bereich des Schalenkörpers 3 reduziert werden. Die Abdeckkappe 7 weist des Weiteren innenseitig nicht dargestellte Mittel zur Sicherung des Schraubenkopfes oder der Mutter gegen eine ungewollte Verdrehung auf.

### Bezugszeichenliste

- 1: Kraftstoffreservoir
- 2: Zu- und Abflussöffnungen
- 3, 3a, 3b: Schalenkörper
- 4: Vorratsraum
- 5: Verstärkung
- 6: Zugentlastungsmittel
- 61: Kopf
- 7: Abdeckkappe
- 8: Anker
- 81, 82: Endflächen
- 83: Aufnahmeraum
- 9: Dichtelement

## Patentansprüche

1. Kraftstoffreservoir (1) für ein Kraftfahrzeug, aufweisend einen mit Zu- und Abflussöffnungen (2) versehenen Schalenkörper (3, 3a, 3b) aus einem Kunststoffmaterial, durch den ein Vorratsraum (4) zur Aufnahme von Kraftstoff vorgegeben ist, wobei innerhalb des Vorratsraums (4) eine Verstärkung (5) zur Kompensation von auf den Schalenkörper (3, 3a, 3b) wirkenden Kräften vorgesehen ist, wobei die Verstärkung (5) einen Anker (8) und ein Zugentlastungsmittel (6) umfasst, wobei der Anker (8) einen innerhalb des Ankers (8) ausgebildeten Aufnahmeraum (83) für das Zugentlastungsmittel (6) umfasst und wobei das Zugentlastungsmittel (6) zumindest teilweise im Aufnahmeraum (83) des Ankers (8) angeordnet ist und den Schalenkörper (3, 3a, 3b) durchdringt, wobei der Anker (8) planparallele Endflächen (81, 82) aufweist und der Anker (8) an seinen Endflächen (81, 82) mit dem Schalenkörper (3) stoffschlüssig verbunden ist, **dadurch gekennzeichnet, dass** der Anker (8) eine offene Längsrippenstruktur aufweist.

2. Kraftstoffreservoir (1) nach Anspruch 1, wobei der Anker (8) als Kunststoffanker ausgeführt ist.

3. Kraftstoffreservoir (1) nach Anspruch 1 oder 2, wobei der Anker (8) eine längliche Form aufweist.

4. Kraftstoffreservoir (1) nach Anspruch 3, wobei der Anker (8) säulenförmig gerade ausgebildet ist.

5. Kraftstoffreservoir (1) nach Anspruch 3 oder 4, wobei beide Enden des Zugentlastungsmittels (6) den Schalenkörper (3, 3a, 3b) durchdringen.

6. Kraftstoffreservoir (1) nach einem der vorangehenden Ansprüche, wobei der Anker (8) an seinen Endflächen (81, 82) mit dem Schalenkörper (3) verschweißt ist.

7. Kraftstoffreservoir (1) nach Anspruch 6, wobei die stoffschlüssige Verbindung den innerhalb des Ankers (8) ausgebildeten Aufnahmeraum (83) für ein Zugentlastungsmittel (6) vom Vorratsraum (4) abdichtend trennt.

8. Kraftstoffreservoir (1) nach einem der vorangehenden Ansprüche, wobei ein Dichtelement (9), insbesondere ein Dichtungsring den innerhalb des Ankers (8) ausgebildeten Aufnahmeraum für ein Zugentlastungsmittel (6) vom Vorratsraum (3) abdichtend trennt.

9. Kraftstoffreservoir (1) nach einem der vorangehenden Ansprüche, wobei das Zugentlastungsmittel (6) gegen einen Abschnitt der Außenfläche des Schalenkörpers (3, 3a, 3b) wirkt.

10. Kraftstoffreservoir (1) nach Anspruch 5, wobei beide Enden des Zugentlastungsmittels (6) gegen jeweils einen Abschnitt der Außenfläche des Schalenkörpers (3, 3a, 3b) wirken.

11. Kraftstoffreservoir (1) nach einem der vorangehenden Ansprüche, wobei das Zugentlastungsmittel (6) ein Zugbolzen ist, der vorzugsweise zumindest teilweise in einer Längsbohrung als Aufnahmeraum (83) innerhalb des Ankers (8) verläuft.

12. Kraftstoffreservoir (1) nach Anspruch 11, wobei der Zugbolzen (6) als Schrauboder Nietbolzen ausgeführt ist, dessen Kopf (61) gegen einen Abschnitt der Außenfläche des Schalenkörpers (3, 3a, 3b) wirkt.

13. Kraftstoffreservoir (1) nach Anspruch 12, wobei der Kopf (61) durch eine Schraubenmutter oder eine Schraubenmutter zusammen mit einer Unterlegscheibe gebildet ist.

14. Kraftstoffreservoir (1) nach Anspruch 12 oder 13, wobei der Kopf (61) des Zugbolzens (6) durch eine stoffschlüssig auf dem Schalenkörper (3, 3a, 3b) angebrachte und vorzugsweise aufgeschweißte Abdeckkappe (7) vom Außenraum abdichtend getrennt wird.

15. Kraftstoffreservoir (1) nach einem der vorangehenden Ansprüche, wobei das Kraftstoffreservoir (1) eine Anzahl von Verstärkungen (5) umfasst, die vorzugsweise annähernd parallel zueinander ausgerichtet sind.

## Claims

1. Fuel reservoir (1) for a motor vehicle, comprising a shell body (3, 3a, 3b) that is provided with inlet and discharge openings (2) and is manufactured in a synthetic material, by means of which a storage chamber (4) is provided for receiving fuel, wherein a reinforcement (5) for compensating forces acting on the shell body (3, 3a, 3b) is provided inside the storage chamber (4), wherein the reinforcement (5) comprises a support (8) and a stress relief means (6), wherein the support (8) comprises a receiving chamber (83) that is embodied inside the support (8) and is provided for the stress relief means (6) and wherein the stress relief means (6) is arranged at least partially in the receiving chamber (83) of the support (8) and penetrates the shell body (3, 3a, 3b), wherein the support (8) comprises plane-parallel end surfaces (81, 82) and the support (8) is connected at its end surfaces (81, 82) to the shell body (3) by material engagement, **characterized in that** the support (8) comprises an open longitudinal rib structure.

2. Fuel reservoir (1) according to Claim 1, wherein the support (8) is embodied as a synthetic material support.

3. Fuel reservoir (1) according to Claim 1 or 2, wherein the support (8) comprises an elongated shape.

4. Fuel reservoir (1) according to Claim 3, wherein the support (8) is embodied in the shape of a straight column.

5. Fuel reservoir (1) according to Claim 3 or 4, wherein both ends of the stress relief means (6) penetrate the shell body (3, 3a, 3b).

6. Fuel reservoir (1) according to any one of the preceding claims, wherein the support (8) is welded at its end surfaces (81, 82) to the shell body (3).

7. Fuel reservoir (1) according to Claim 6, wherein the connection provided by material engagement separates the receiving chamber (83) that is embodied inside the support (8) and is provided for a stress relief means (6) from the storage chamber (4) in a sealing manner.

8. Fuel reservoir (1) according to any one of the preceding claims, wherein a sealing element (9), in particular a sealing ring, separates the receiving chamber that is embodied inside the support (8) and is provided for a stress relief means (6) from the storage chamber (4) in a sealing manner.

9. Fuel reservoir (1) according to any one of the preceding claims, wherein the stress relief means (6) acts against a section of the outer surface of the shell body (3, 3a, 3b).

10. Fuel reservoir (1) according to Claim 5, wherein both ends of the stress relief means (6) act against a section of the outer surface of the shell body (3, 3a, 3b) respectively.

11. Fuel reservoir (1) according to any one of the preceding claims, wherein the stress relief means (6) is a tension pin that extends preferably at least partially in a longitudinal bore that is embodied as a receiving chamber (83) inside the support (8).

12. Fuel reservoir (1) according to Claim 11, wherein the tension pin (6) is embodied as a stud bolt or a riveting bolt whose head (61) acts against a section of the outer surface of the shell body (3, 3a, 3b).

13. Fuel reservoir (1) according to Claim 12, wherein the head (61) is embodied by means of a screw nut or a screw nut together with a washer.

14. Fuel reservoir (1) according to Claim 12 or 13, wherein the head (61) of the tension pin (6) is separated from the environment in a sealing manner by a cover cap (7) that is attached to the shell body (3, 3a, 3b) by material engagement and preferably is welded thereto.

15. Fuel reservoir (1) according to any one of the preceding claims, wherein the fuel reservoir (1) comprises a number of reinforcements (5) that are arranged preferably approximately in parallel with each other.

## Revendications

1. Réservoir de carburant (1) pour un véhicule automobile, comprenant un corps de coque (3, 3a, 3b) pourvu d'ouvertures d'alimentation et d'évacuation (2) et constitué d'une matière plastique, au moyen duquel corps de coque est prédéfini un espace de stockage (4) pour recevoir du carburant, un renforcement (5) étant prévu à l'intérieur de l'espace de stockage (4) pour la compensation de forces agissant sur le corps de coque (3, 3a, 3b), le renforcement (5) comportant une armature (8) et un moyen de détente de traction (6), l'armature (8) comportant un espace de réception (83), réalisé à l'intérieur de l'armature (8), pour le moyen de détente de traction (6) et le moyen de détente de traction (6) étant disposé au moins partiellement dans l'espace de réception (83) de l'armature (8) et traversant le corps de coque (3, 3a, 3b), l'armature (8) comprenant des surfaces d'extrémité (81, 82) planes et parallèles et l'armature (8), au niveau de ses surfaces d'extrémité (81, 82), étant reliée par liaison de matière au corps de coque (3), **caractérisé en ce que** l'armature (8) comprend une structure nervurée longitudinale ouverte.

2. Réservoir de carburant (1) selon la revendication 1, dans lequel l'armature (8) est réalisée sous forme d'armature en plastique.

3. Réservoir de carburant (1) selon la revendication 1 ou 2, dans lequel l'armature (8) présente une forme allongée.

4. Réservoir de carburant (1) selon la revendication 3, dans lequel l'armature (8) est réalisée de manière rectiligne en forme de colonne.

5. Réservoir de carburant (1) selon la revendication 3 ou 4, dans lequel les deux extrémités du moyen de détente de traction (6) traversent le corps de coque (3, 3a, 3b).

6. Réservoir de carburant (1) selon l'une quelconque des revendications précédentes, dans lequel l'armature (8) est soudée sur le corps de coque (3) au niveau de ses surfaces d'extrémité (81, 82).

7. Réservoir de carburant (1) selon la revendication 6, dans lequel la liaison de matière sépare de manière étanche l'espace de réception (83), réalisé à l'intérieur de l'armature (8), pour un moyen de détente de traction (6) de l'espace de stockage (4).

8. Réservoir de carburant (1) selon l'une quelconque des revendications précédentes, dans lequel un élément d'étanchéité (9), en particulier une bague d'étanchéité, sépare de manière étanche l'espace de réception, réalisé à l'intérieur de l'armature (8), pour un moyen de détente de traction (6) de l'espace de stockage (4).

9. Réservoir de carburant (1) selon l'une quelconque des revendications précédentes, dans lequel le moyen de détente de traction (6) agit contre une section de la surface extérieure du corps de coque (3, 3a, 3b).

10. Réservoir de carburant (1) selon la revendication 5, dans lequel les deux extrémités du moyen de détente de traction (6) agissent respectivement contre une section de la surface extérieure du corps de coque (3, 3a, 3b).

11. Réservoir de carburant (1) selon l'une quelconque des revendications précédentes, dans lequel le moyen de détente de traction (6) est un boulon de tension qui s'étend de préférence au moins partiellement dans un alésage longitudinal faisant office d'espace de réception (83) à l'intérieur de l'armature (8).

12. Réservoir de carburant (1) selon la revendication 11, dans lequel le boulon de tension (6) est réalisé sous forme de boulon fileté ou rivé dont la tête (61) agit contre une section de la surface extérieure du corps de coque (3, 3a, 3b).

13. Réservoir de carburant (1) selon la revendication 12, dans lequel la tête (61) est formée par un écrou ou par un écrou conjointement avec une rondelle.

14. Réservoir de carburant (1) selon la revendication 12 ou 13, dans lequel la tête (61) du boulon de tension (6) est séparée de manière étanche de l'espace extérieur au moyen d'un capuchon de recouvrement (7) fixé sur le corps de coque (3, 3a, 3b) par liaison de matière et de préférence soudé sur celui-ci.

15. Réservoir de carburant (1) selon 1"une quelconque des revendications précédentes, dans lequel le réservoir de carburant (1) comporte un certain nombre de renforcements (5) qui sont de préférence orientés de manière approximativement parallèle les uns aux autres.
